# EUROPEAN PATENT APPLICATION

(11) **EP 4 657 636 A1**
(43) Date of publication of application: **03.12.2025**
(21) Application number: 24836356.6
(22) Date of filing: 04.07.2024
(51) Int. Cl.: H01M 50/325, H01M 50/30, H01M 50/249

(54) **BATTERY PACK AND VEHICLE INCLUDING SAME**

(30) Priority: 04.07.2023 KR 20230086788
(71) Applicant: LG Energy Solution, Ltd., Seoul 07335 (KR)
(72) Inventor: JUNG, Ki-Taek, Daejeon 34122 (KR); KIM, Soo-Youl, Daejeon 34122 (KR)
(74) Representative: Plasseraud IP
(86) International application number: PCT/KR2024/009476
(87) International publication number: WO 2025/009909

(57) **Abstract**

A battery pack according to the present disclosure may include a plurality of cell assemblies; a pack case in which a receiving space for accommodating the plurality of cell assemblies is formed; and a discharge unit provided to be partially exposed to one side of the pack case and discharging venting gas generated by a thermal event in the cell assembly to the outside of the pack case.

## Description

### TECHNICAL FIELD

The present disclosure relates to a battery pack, and more specifically, to a battery pack capable of delaying thermal propagation by efficiently and quickly discharging venting gas when a thermal event occurs in the battery module. The present application claims priority to Korean Patent Application No. 10-2023-0086788 filed on July 4, 2023 in the Republic of Korea, the disclosures of which are incorporated herein by reference.

### BACKGROUND ART

A semi-permanent battery that converts electrical energy into chemical energy and can be repeatedly charged and discharged is called a secondary battery, in distinction from a primary battery that cannot be reused after one use.

In particular, a lithium-ion secondary battery has advantages such as high energy storage density, light weight, miniaturization, excellent safety, low discharge rate, and long life, so that it has been actively used as batteries for electric vehicles in recent years. For reference, a lithium-ion secondary battery is generally classified into cylindrical, prismatic, and pouch types depending on the manufacturing form, and used in a wide variety of applications, including energy storage systems (ESSs) and other electrical devices in addition to electric vehicles.

Currently, the operating voltage of a single lithium-ion secondary battery cell is about 2.5 V to 4.5 V. Therefore, in order to apply a secondary battery as an energy source for electric vehicles, a plurality of lithium-ion secondary battery cells are connected in series and/or in parallel to form a battery module, and then the battery modules are connected in series and/or in parallel to form a battery pack.

Meanwhile, since a secondary battery involves chemical reactions during charging and discharging, its performance may be degraded when used in an environment higher than an appropriate temperature, and there is always a possibility of unexpected ignition or explosion if heat control is not achieved at an appropriate temperature. Furthermore, a battery pack, which is an assembly of secondary batteries, has a structure in which these secondary batteries are accommodated as intensively as possible inside the pack case, thereby making it vulnerable to thermal events.

Thus, when a thermal event such as overheating or thermal runaway occurs in a specific battery module, the internal pressure inside the battery pack increases and the accumulation of thermal energy is accelerated due to venting gas and flames generated in the battery module where the event occurs, which may easily cause thermal propagation to adjacent battery modules. This may lead to a series of thermal runaways in the battery modules and an explosion of the entire battery pack.

Accordingly, research and development on a structure that effectively discharges venting gas generated by the thermal event in the initially ignited battery module to the outside of the battery pack, are being actively conducted. In particular, in the case of vehicles, it is necessary to ensure that the discharge flow of venting gas or the like may not be obstructed by structures such as a vehicle body or chassis provided adjacent to the battery pack, and the discharge of solid ejection ejected together with the venting gas may be properly controlled, thereby discharging the venting gas smoothly and quickly before thermal energy is accumulated due to the ejection inside the battery pack.

### DISCLOSURE

### Technical Problem

The present disclosure is designed to solve the problems of the related art, and therefore the present disclosure is directed to providing a battery pack in which the discharge flow of venting gas or the like may be made in a direction that is not obstructed or blocked by structures such as a vehicle body or chassis provided adjacent to the battery pack, and solid ejection that may be ejected together with the venting gas may be filtered during the discharge process, so that the venting gas may be discharged smoothly and quickly before thermal energy is accumulated due to the ejection inside the battery pack, thereby delaying the thermal propagation phenomenon.

Technical problems to be solved by the present disclosure are not limited to the above-described problems, and other problems not mentioned herein may be clearly understood by those skilled in the art from the following description of the present disclosure.

### Technical Solution

A battery pack according to the present disclosure may include a plurality of cell assemblies; a pack case in which a receiving space for accommodating the plurality of cell assemblies is formed; and a discharge unit provided to be partially exposed to one side of the pack case and discharging venting gas generated by a thermal event in the cell assembly to the outside of the pack case.

The discharge unit may be configured to capture solid ejection ejected together with the venting gas and discharge the venting gas to the outside. In other words, the discharge unit may be configured to mutually separate the solid ejection and the venting gas among the ejection ejected from the cell assembly, and then to capture the solid ejection and discharge the venting gas to the outside.

The discharge unit may be provided at the lower side of the pack case to discharge the venting gas downward from the pack case.

The cell assembly may be disposed along the width direction and the length direction within the receiving space of the pack case, and the discharge unit may include at least one of a first discharge portion provided on the outer perimeter of the lower surface of the pack case; and a second discharge portion provided on the central area of the lower surface in the width direction.

For example, the discharge unit may include a first discharge portion provided on the outer perimeter of the lower surface of the pack case.

The discharge unit may include a second discharge portion provided on the central area of the lower surface in the width direction. The discharge unit may include the first discharge portion and the second discharge portion.

The pack case may include a pack frame provided to have open top and bottom ends to accommodate the cell assembly therein; and a lower frame portion disposed below the pack frame to seat and support the plurality of cell assemblies.

The lower frame portion may include a base plate coupled to the pack frame to support the cell assembly; and a bottom cover disposed on the lower surface of the pack case so as to cover the base plate.

Each of the first discharge portion and the second discharge portion may include a discharge pipe disposed through the base plate and the bottom cover; and a venting valve connected to communicate with the discharge pipe and provided to be exposed to the outer surface of the bottom cover.

The battery pack may further include a first mesh net disposed in the discharge pipe to capture the solid ejection.

The lower frame portion may further include a bottom reinforce bar provided between the lower portion of the base plate and the bottom cover, and a plurality of through holes into which the discharge pipe is inserted may be provided in the base plate and the bottom cover, wherein the through holes may be formed at a position that does not interfere with the bottom reinforce bar.

The base plate may be provided with a center beam that is disposed to extend in the width direction of the cell assembly and mutually separates the cell assemblies adjacent to each other in the length direction.

The center beam may have a longitudinal cross-section in the shape of the letter 'n' or ' 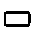 ' when viewed in the width direction of the cell assembly.

Ejection holes through which the venting gas is ejected may be formed on the center beam on both side surfaces of the center beam.

The ejection holes may be formed on the upper side of the side surface of the center beam.

The second discharge portion may further include a connection pipe provided to be in contact with the inner wall of the center beam, and configured such that one end is disposed adjacent to the ejection hole and the other end is connected to the discharge pipe; and a plurality of second mesh nets disposed in the connection pipe.

A communication groove that communicates with the ejection hole may be formed on one side of the connection pipe.

The connection pipe may include a first connecting section having a cross-section in a rectangular shape; a second connecting section having a cross-section in a circular shape; and a pipe reduction section interconnecting the first connecting section and the second connecting section, the pipe reduction section being tapered to have an inner diameter.

The solid ejection may be captured by the first mesh net and the second mesh net, and the venting valve may be provided to discharge the venting gas.

The first mesh net or the second mesh net may include two or more types of meshes having different scale sizes.

The cell assembly may be accommodated in a module case to form a battery module, and the battery pack may further include a transverse partition wall that comparts the receiving space for each of the battery modules together with the center beam; and a top cover that seals the receiving space, and the venting gas from any one battery module may be discharged to the outside of the battery pack through the first discharge portion or the second discharge portion from each of the receiving spaces without affecting the other battery modules.

The battery module may have top venting or side venting.

The second discharge portion may be inserted into the center beam.

The discharge pipe may be positioned to avoid a flow path where a coolant flow of the base plate, which may be integral with a heat sink, is formed.

The discharge of the venting gas through the first discharge portion or the second discharge portion may be completely spatially separated from the cooling by the heat sink.

The venting gas may be discharged to the outside of the battery pack through the discharge pipe without spreading in the space between the base plate and the bottom cover.

A hollow portion may be formed in the transverse partition wall, a hole communicating with the receiving space may be formed in the transverse partition wall, and the hollow portion of the transverse partition wall and the hollow portion of the center beam may be communicated with each other.

The venting gas may flow inside the transverse partition wall to be discharged to the outside of the battery pack through the second discharge portion.

The second discharge portion may further include a baffle plate.

According to the present disclosure, a vehicle including one or more battery packs described above may be provided.

### Advantageous Effects

According to one aspect of the present disclosure, the venting gas or the like generated by a thermal event may be discharged in a downward direction from the battery pack that is not obstructed or blocked by structures such as a vehicle body or chassis provided adjacent to the battery pack.

When a thermal event occurs, venting gas may be generated in the cell assembly, and solid ejection such as electrode fragments or spark particles may be ejected together with the venting gas. According to one aspect of the present disclosure, the solid ejection and the venting gas may be separated from each other, so that the solid ejection may be captured and the venting gas may be discharged to the outside of the battery pack. That is, the solid ejection may be filtered out during the discharge process of the venting gas. Therefore, before thermal energy is accumulated due to the ejection inside the battery pack, the venting gas or the like may be discharged smoothly and quickly. As the pressure and thermal energy inside the battery pack are discharged efficiently, the thermal propagation phenomenon that is serially transmitted to the neighboring cell assemblies may be delayed.

According to one aspect of the present disclosure, the solid ejection may be captured and separated by the plurality of mesh nets of the discharge unit, and only the venting gas may be discharged to the outside of the pack case, thereby minimizing clogging of the venting valves.

The effects to be obtained by the present disclosure are not limited to the above-described effects, and other effects not mentioned herein may be clearly understood by those having ordinary skill in the art from this specification and the accompanying drawings.

### DESCRIPTION OF DRAWINGS

The accompanying drawings illustrate a preferred embodiment of the present disclosure and together with the foregoing disclosure, serve to provide further understanding of the technical features of the present disclosure, and thus the present disclosure is not construed as being limited to the drawing.
FIGS. 1 and 2 are schematic perspective views of a battery pack according to an embodiment of the present disclosure.
FIGS. 3 and 4 are exploded perspective views of main components of the battery pack of FIG. 1.
FIG. 5 is a longitudinal cross-sectional view of a battery pack along the cut line A-A' of FIG. 2.
FIG. 6 is a bottom view of a battery pack according to an embodiment of the present disclosure.
FIG. 7 is a view showing a first discharge portion in a discharge unit of a battery pack according to an embodiment of the present disclosure.
FIG. 8 is a view showing a second discharge portion in a discharge unit of a battery pack according to an embodiment of the present disclosure.
FIG. 9 is a modified example of FIG. 8.
FIG. 10 is a cutaway view of a center beam portion of a battery pack according to an embodiment of the present disclosure.
FIG. 11 is a view schematically showing a process of discharging venting gas of a battery pack according to an embodiment of the present disclosure.
FIGS. 12 and 13 are partial enlarged views of the first discharge portion and the second discharge portion in FIG. 11, respectively.
FIG. 14 shows a modified example of portion B in FIG. 3.
FIG. 15 is another modified example of FIG. 8.
FIG. 16 is a view for describing a vehicle according to an embodiment of the present disclosure.

### BEST MODE

Hereinafter, preferred embodiments of the present disclosure will be described in detail with reference to the accompanying drawings. Prior to the description, it should be understood that the terms or words used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments described in this specification and the configurations shown in the drawings are only one of the most preferred embodiments of the present disclosure, not intended to entirely represent the technical aspects of the present disclosure, so it should be understood that various equivalents and modifications may be made thereto at the time of filing the present application.

The present disclosure may be implemented independently by each of the following embodiments. Furthermore, the present disclosure may be implemented by combining two or more of the following embodiments. Each of the following embodiments may be implemented independently and may also be freely combined with each other.

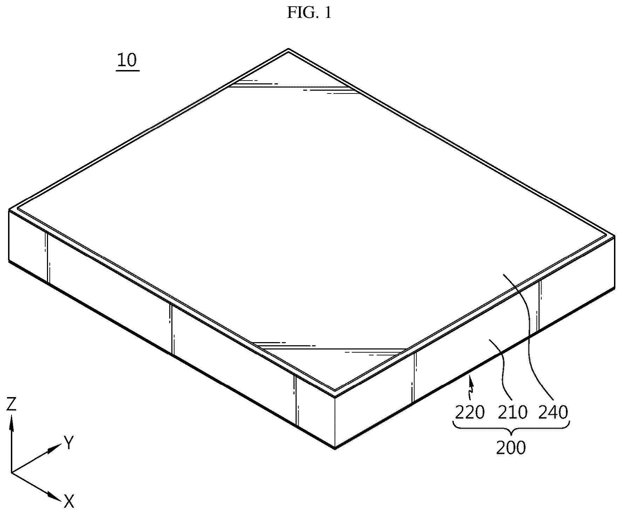

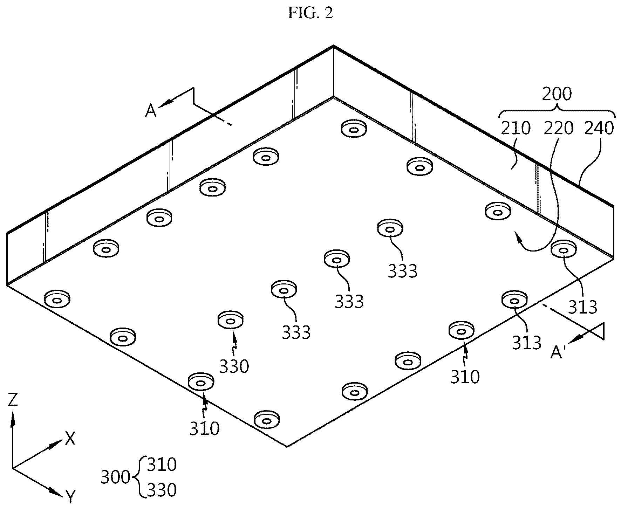

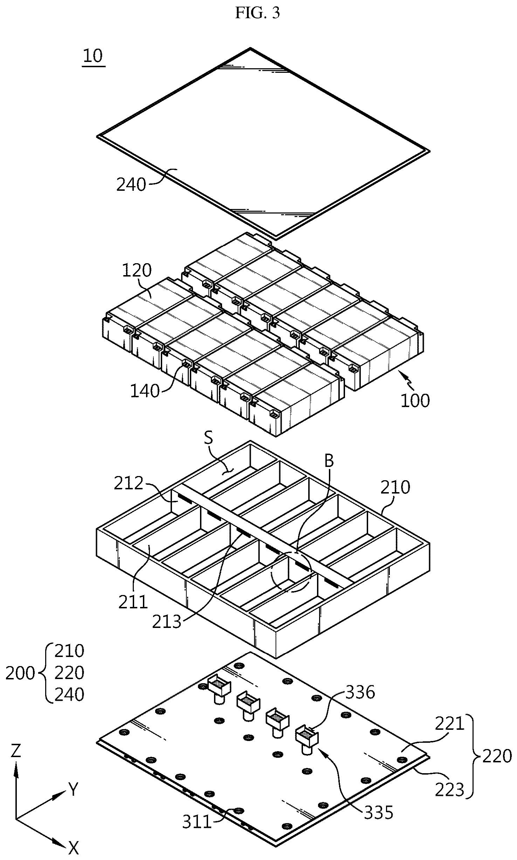

FIGS. 1 and 2 are schematic perspective views of a battery pack according to an embodiment of the present disclosure, and FIG. 3 is an exploded perspective view of main components of the battery pack of FIG. 1.

Referring to FIGS. 1 to 3, the battery pack 10 according to this embodiment may include a plurality of battery modules 100 corresponding to a plurality of cell assemblies. The battery pack 10 may include a pack case 200 in which a receiving space S for accommodating the plurality of battery modules 100 is formed. The battery pack 10 may include a discharge unit 300 that discharges venting gas generated by a thermal event in the battery module 100 to the outside of the pack case 200.

First, referring to FIG. 1, the pack case 200 may include a pack frame 210. The pack case 200 may include a top cover 240 disposed on the upper side of the pack frame 210. The pack case 200 may include a lower frame portion 220 disposed on the lower side of the pack frame 210.

The pack case 200 may form the outer appearance of the battery pack 10. The battery pack 10 may have a roughly rectangular prism appearance having a predetermined width and length in the width direction (X-axis) and the length direction (Y-axis) and a predetermined height in the height direction (Z-axis). The bottom surface (X-Y plane) of the battery pack 10 may have a larger area than the side surface. Such a battery pack 10 has a shape suitable for densely accommodating battery cells therein.

Referring to FIG. 2, the discharge unit 300 may include a first discharge portion 310 disposed on the lower surface of the pack case 200. The first discharge portion 310 may be provided on the outer perimeter of the lower surface of the pack case 200. The first discharge portion 310 may include a venting valve 313.

The discharge unit 300 may include a second discharge portion 330 disposed on the lower surface of the pack case 200. The second discharge portion 330 may be provided on the central area of the lower surface in the width direction (X-axis direction). The second discharge portion 330 may include a venting valve 333.

The discharge unit 300 may be provided to be partially exposed on one side of the pack case 200. As shown, the venting valve 313 of the first discharge portion 310 may be provided to be exposed on the lower surface of the pack case 200. The venting valve 333 of the second discharge portion 330 may be provided to be exposed on the lower surface of the pack case 200.

Referring to FIG. 3, the battery pack 10 may include a battery module 100. The battery module 100 may be a type of cell assembly.

In this specification, the cell assembly may refer to a unit in which a plurality of battery cell groups are electrically connected. For example, the cell assembly may include a cell stack in which a plurality of battery cells are stacked, and a busbar structure electrically coupled to the cell stack. For reference, a battery cell refers to a completed secondary battery that can be repeatedly charged and discharged, and is not limited to a form such as a pouch-type battery, a cylindrical battery, or a prismatic battery. And, a cell assembly corresponds to a concept in which a plurality of such battery cells are assembled, and for example, the cell stack of a bundle of pouch-type batteries may be mechanically restrained and electrically connected by busbar frame assemblies at both front and rear ends to form a single cell assembly.

One or more of these cell assemblies may be accommodated in a module case 120 to be implemented as a battery module 100. This embodiment shows and describes that a cell assembly converted into the battery module 100 is included in the battery pack 10, but when implemented as a battery pack having a cell-to-pack structure to increase the space utilization of the battery pack 10, the cell assembly may be directly assembled to the pack case 200 without the module case 120.

Referring mainly to FIG. 3, the battery module 100 may include a plurality of battery cells (not shown). The battery cell refers to a secondary battery including an electrode assembly, an electrolyte, and a pouch case accommodating the electrode assembly, and this embodiment contemplates a pouch-type battery cell having a high energy density and ease of stacking, but it is obvious that a cylindrical or prismatic secondary battery may be applied as a battery cell.

The pouch-type battery cell may include a pair of electrode leads (not shown) that are connected to the electrode assembly and are drawn out to the outside of the pouch case to function as electrode terminals. The pair of electrode leads may be drawn out forward and backward along the length direction. Alternatively, they may be drawn out at both ends of the battery cell, that is, in the length direction (±Y direction). If necessary, the electrode leads may have a form of being located only at one end in the Y-axis direction, for example, at the end in the -Y-axis direction. Adjacent to a pair of electrode leads of such battery cells, electrical components such as busbars, busbar frames, and module connectors, although not shown, may be mounted.

The battery module 100 may include a module case 120 for accommodating such battery cells. The module case 120 is configured to accommodate one or more battery cells and may be made of a metal material with high rigidity and durability or a plastic material such as ABS resin in order to physically or chemically protect the accommodated battery cells. The terminal 140 of the battery module 100 may be provided on a side portion (both sides in the Y-axis direction) located at the front or rear of the module case 120. The terminal 140 may be either a positive electrode or a negative electrode, and may be provided on both side portions of the battery module 100, or in some cases, only on one side portion. An inter-busbar (not shown) may be further connected to the terminal 140 for electrical connection between the battery modules 100.

The battery module 100 may have an upper venting structure. For example, a venting hole or a venting slit may be formed on the upper surface of the module case 120 so that venting gas generated from the battery cells within the battery module 100 may be discharged to the upper portion of the battery module 100.

As another example, the battery module 100 may have a side venting structure. A venting hole or a venting slit may be formed on the side surface of the module case 120 so that venting gas generated from the battery cells within the battery module 100 may be discharged to the side of the battery module 100.

As shown in FIG. 3, a plurality of battery modules 100 may be accommodated in the pack case 200. To this end, a receiving space S in which a plurality of battery modules 100 are accommodated may be formed inside the pack case 200. The battery module 100 may be disposed along the width direction (X-axis direction) and the length direction (Y-axis direction) within the receiving space S of the pack case 200. Meanwhile, the pack case 200 is a component for protecting the battery modules 100 from external impacts or the like, and may be formed of a material having excellent mechanical rigidity.

In FIG. 3, the pack case 200 is shown as being separated into a top cover 240, a pack frame 210, and a lower frame portion 220. The pack case 200 may be provided such that the pack frame 210 and the lower frame portion 220 are mutually coupled, and accordingly, the bottom surface of the pack case 200 may become the upper surface of the lower frame portion 220. The pack frame 210 and the lower frame portion 220 may be mutually coupled to form a pack tray. The upper end of the pack tray may be provided in an open form, and may be mutually coupled to the top cover 240. When the pack tray and the top cover 240 are mutually coupled, various coupling methods for sealing, such as bolting, welding, adhesion, hooking, and other coupling processes may be applied.

A transverse (Y-axis direction) partition wall 211 that comparts the interior may be provided in the pack frame 210. A longitudinal (X-axis direction) center beam 212 that comparts the interior may be provided in the pack frame 210. Here, the center beam 212 may be disposed in the center of the receiving space S and may be disposed to extend in the width direction (X-axis direction) of the battery module 100. The transverse partition wall 211 and the center beam 212 may compart and separate the plurality of battery modules 100.

An ejection hole 213 may be formed along the side surface in the center beam 212. The discharge unit 300 may be inserted into the center beam 212, and venting gas or the like in the receiving space S may be discharged through the discharge unit 300. The venting gas may include electrolyte gas generated from the battery cell or gas generated by a flame. As the venting gas is discharged, solid ejection such as electrode fragments or spark particles may also be discharged together. The internal space of the center beam 212 may provide a discharge path for the venting gas and solid ejection.

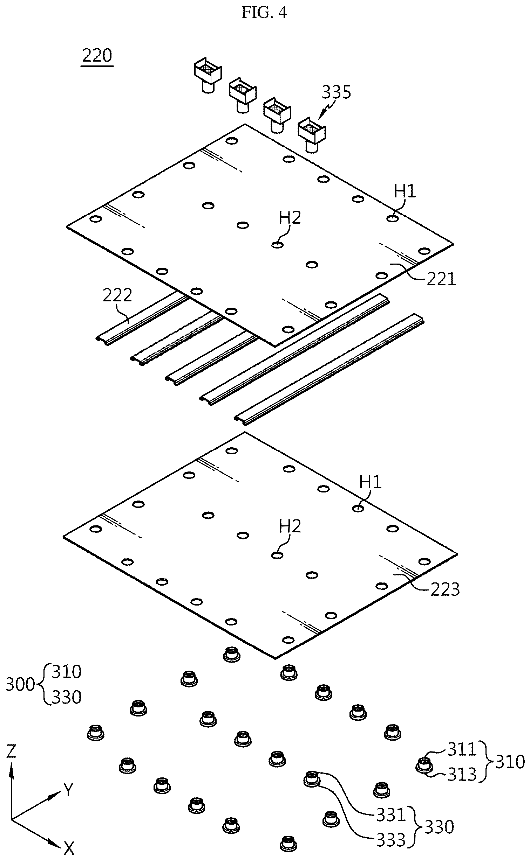

Referring mainly to FIG. 3, the lower frame portion 220 forms the bottom surface of the pack case 200, and a plurality of through holes H1, H2 (see FIG. 4) may be formed in the lower frame portion 220. The lower frame portion 220, which will be described in detail later, is provided in a multi-laminated structure with a base plate 221 and a bottom cover 223, and the through holes H1, H2 may be formed in both the base plate 221 and the bottom cover 223.

The discharge unit 300 may be coupled to the through holes H1, H2. The discharge unit 300 may be provided to be partially exposed on one side of the pack case 200. The discharge unit 300 may discharge the venting gas generated by a thermal event in the battery module 100 within the pack case 200 to the outside of the pack case 200. For example, as shown in FIG. 2, the discharge unit 300 may be provided on the lower surface of the pack case 200 to discharge the venting gas downward from the pack case 200. The discharge unit 300 may be provided to be inserted into the lower frame portion 220 and partially exposed to the lower surface of the pack case 200.

Referring to FIG. 3, it is shown that a discharge pipe 311 is coupled to the through hole H1 disposed along the outer perimeter (edge) of the lower frame portion 220, and a connection pipe 335 is disposed in the through hole H2 disposed in the width direction of the battery module 100 on the central area of the lower frame portion 220. On one side of the connection pipe 335, a communication groove 336 may be formed. The discharge pipe 311 and the connection pipe 335 will be described in detail later.

In such a discharge unit 300, the venting gas generated in the receiving space S of the pack case 200 may be discharged through the lower frame portion 220 and discharged through a plurality of venting valves 313, 333 on the lower surface of the pack case 200 of FIG. 2. Accordingly, the discharge flow of the venting gas or the like may be made downward, in a direction that is not obstructed or blocked by structures such as a vehicle body or chassis provided adjacent to the battery pack 10.

More specifically, in the case of vehicles, the battery pack 10 is usually installed on the bottom of a vehicle body, and a cabin where passengers board and reside is generally located on the upper side of the battery pack 10, so it is not easy to discharge venting gas upward. Additionally, there is an aspect that venting gas is not discharged smoothly even in the overall length direction of a vehicle, which is the width direction (X-axis direction) of the battery module 100, such as unstable airflow due to the layout of the vehicle body or chassis, or other structures.

On the other hand, since there may be relatively fewer obstacles on the lower side of the battery pack 10, the discharge unit 300 in this embodiment may discharge the venting gas downward through the lower surface of the pack case 200. Accordingly, before thermal energy is accumulated due to the ejection inside the battery pack 10, the venting gas or the like may be discharged smoothly and quickly.

Additionally, the number of discharge paths may be increased compared to the prior art. That is, when discharged in the overall length direction of a vehicle, which is the width direction of the battery module 100, it is difficult to expand the discharge path due to the constraints of the side area of the battery pack 10, and thus the number of discharge paths is inevitably limited. In contrast, if the entire lower surface of the pack case 200 is utilized, it may be easy to increase the number of discharge paths. It may be possible because the bottom surface of the pack case 200 has a relatively large area. In this embodiment, the number of discharge paths and venting valves may be increased by more than twice compared to the prior art, thereby improving the discharge efficiency, so that the thermal propagation phenomenon that is serially transmitted to the neighboring battery modules in the battery pack may be delayed.

Furthermore, according to the above embodiment, it is possible to effectively prevent high-temperature gas or flames from being directed to the upper side of the battery pack 10 in situations such as thermal runaway. In particular, when a passenger is located on the upper side of the battery pack 10, such as in an electric vehicle or the like, gas or flames may be suppressed or delayed from being directed to the passenger according to the above embodiment. And, it is possible to be free from the layout structure or other constraints that may be required to mount the battery pack 10 on the vehicle while ensuring the safety of the upper side of the battery pack 10.

Hereinafter, the pack case 200 will be described in more detail.

Referring to FIG. 3 again, the pack frame 210 may be provided as a frame in the shape of a rectangular frame. The pack frame 210 may be provided in a form where the top and bottom ends are open. The top cover 240 may be disposed on the top end of the pack frame 210, and the lower frame portion 220 may be disposed on the bottom end of the pack frame 210. Accordingly, the pack frame 210 may have the receiving space S for accommodating the battery module 100 therein formed.

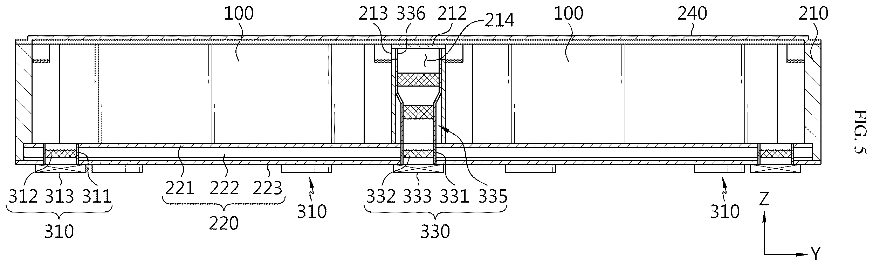

FIG. 4 is an exploded perspective view of main components of the battery pack of FIG. 1, and FIG. 5 is a longitudinal cross-sectional view of a battery pack along the cut line A-A' of FIG. 2.

Referring mainly to FIGS. 2 and 5, a transverse (Y-axis direction) partition wall 211 that comparts the interior of the pack frame 210 may be provided in the pack frame 210. The transverse partition wall 211 may be disposed in the length direction (Y-axis direction) and may be disposed to be spaced apart by the width of the battery module 100.

A longitudinal (X-axis direction) center beam 212 that comparts the interior of the pack frame 210 may be provided in the pack frame 210. The center beam 212 may be disposed to extend in the width direction (X-axis direction) in the center of the pack frame 210 to mutually separate the battery modules 100 adjacent to each other in the length direction. The center beam 212 may have a longitudinal cross-section in the shape of the letter 'n' or ' 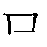 ' when viewed in the width direction of the battery module 100, and the interior of the center beam 212 may be an empty hollow portion 214. In this embodiment, as shown in FIG. 5, the center beam 212 may have an 'n' shape with an open bottom end. Meanwhile, when the longitudinal cross-section of the center beam 212 has an 'n' shape, it may have an ' 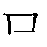 ' shape if the lower frame portion 220 is coupled to the bottom opening. Wiring and other electrical units may be inserted into the hollow portion 214 of the center beam 212.

A plurality of ejection holes 213 may be formed on both side surfaces of the center beam 212. Through the ejection holes 213, the venting gas or the like in the receiving space S may be ejected to the hollow portion 214 inside the center beam 212. The ejection hole 213 may also be formed on the upper side of the side surface of the center beam 212.

In this embodiment, it is shown that five transverse partition walls 211 are provided and one center beam 212 is provided inside the pack frame 210 to accommodate ten battery modules 100 within the receiving space S. Meanwhile, the scope of the present disclosure is not limited to the number of transverse partition walls 211 and center beams 212 in this embodiment, or the number of battery modules 100 accommodated.

Referring to FIGS. 1 to 3 again, the top cover 240 may be disposed on the top of the pack frame 210, and the top cover 240 may be provided to seal the receiving space S in which the battery module 100 is accommodated. The top cover 240 in this embodiment may be provided to completely cover the ten battery modules 100. The top cover 240 may be made of an aluminum material or SUS material to ensure rigidity and at the same time may be made of a material with high conductivity. There may or may not be a gap between the lower surface of the top cover 240 and the upper surface of the battery module 100.

The upper surface of the transverse partition walls 211 and the upper surface of the center beam 212 may or may not have a gap between them and the lower surface of the top cover 240. For example, when the upper surface of the transverse partition walls 211 and the upper surface of the center beam 212 are in contact with the lower surface of the top cover 240, resulting in no gap between them, each of the battery modules 100 may be completely surrounded by the transverse partition wall 211, the center beam 212 and the top cover 240, and isolated from the other battery modules 100. That is, the receiving spaces S are separated in a number corresponding to the number of battery modules 100 and isolated from each other, and gas generated from any one battery module 100 may be configured to be discharged to the outside of the battery pack 10 from each receiving space S without affecting the other battery modules 100.

The lower frame portion 220 is a part that is disposed below the pack frame 210 to seat and support the plurality of battery modules 100. Referring mainly to FIG. 4, the lower frame portion 220 may include a base plate 221 coupled to the pack frame 210 to support the battery modules 100. The lower frame portion 220 may include a bottom reinforce bar 222 provided between the bottom portion of the base plate 221 and the bottom cover 223. The lower frame portion 220 may include a bottom cover 223 disposed on the lower surface of the pack case 200 to cover the base plate 221.

The base plate 221 may be coupled to the lower portion of the pack frame 210. Referring mainly to FIG. 5, the base plate 221 may be coupled to a step provided at the lower portion of the pack frame 210. The base plate 221 forms the bottom surface of the pack case 200 and may be provided to face the bottom portion of the plurality of battery modules 100 accommodated in the receiving space S. Accordingly, the plurality of battery modules 100 may be stably seated and supported.

Meanwhile, a plurality of coolant flow paths may be provided on the lower surface of the base plate 221, although not shown in the drawing, and the base plate 221 and the cooling configuration may be provided integrally. For example, the base plate 221 may be integral with a heat sink.

Referring mainly to FIGS. 4 and 5, the bottom reinforce bar 222 may be provided between the lower portion of the base plate 221 and the bottom cover 223. The bottom reinforce bar 222 may be provided to be in direct contact with the lower portion of the base plate 221. The bottom reinforce bar 222 may structurally reinforce the base plate 221 by supporting it from below, thereby preventing the base plate 221 from sagging or bending. This bottom reinforce bar 222 may be provided in plurality.

The bottom reinforce bar 222 may be provided at positions corresponding to the five transverse partition walls 211. The bottom reinforce bar 222 may be provided at positions orthogonal to the center beam 212.

The bottom cover 223 may be disposed on the lower surface of the pack case 200 to cover the base plate 221. The bottom cover 223 may be provided to face the bottom end of the pack frame 210 as shown in FIG. 5, and may be disposed to be spaced apart from the base plate 221 and the bottom reinforce bar 222 by a predetermined distance.

As shown in FIG. 4, a plurality of through holes H1, H2 may be formed in this lower frame portion 220. That is, a plurality of through holes H1, H2 into which discharge pipes 311, 331 may be inserted are provided in the base plate 221 and the bottom cover 223, and the through holes H1, H2 may be formed at a position that does not interfere with the bottom reinforce bar 222. The through holes H1, H2 formed in the base plate 221 and the through holes H1, H2 formed in the bottom cover 223 may be aligned with each other in the Z-axis direction. The discharge pipes 311, 331 may each be inserted between the through holes H1, H2 aligned with each other in the Z-axis direction.

The discharge pipes 311, 331 may be positioned to avoid the coolant flow paths of the base plate 221, which may be integral with the heat sink. In this case, the discharge of the venting gas and the battery pack cooling are completely spatially separated from each other within the lower frame portion 220. Since the discharge pipes 311, 331 are used rather than simply disposing venting valves 313, 333 on the lower surface of the pack case 200, the venting gas during the lower venting may be quickly discharged to the outside of the battery pack 10 through the discharge pipes 311, 331 without spreading in the space between the base plate 221 and the bottom cover 223.

The discharge pipes 311, 331 may also be positioned within the coolant flow path of the base plate 221, which may be integral with the heat sink. Accordingly, the venting gas discharged through the discharge pipes 311, 331 may be discharged with its temperature lowered during the discharge process. In this case, the connection part of the discharge pipes 311, 331 and the through holes H1, H2 may be sealed to prevent the coolant from leaking out of the flow path.

Hereinafter, the discharge unit 300 will be described in more detail.

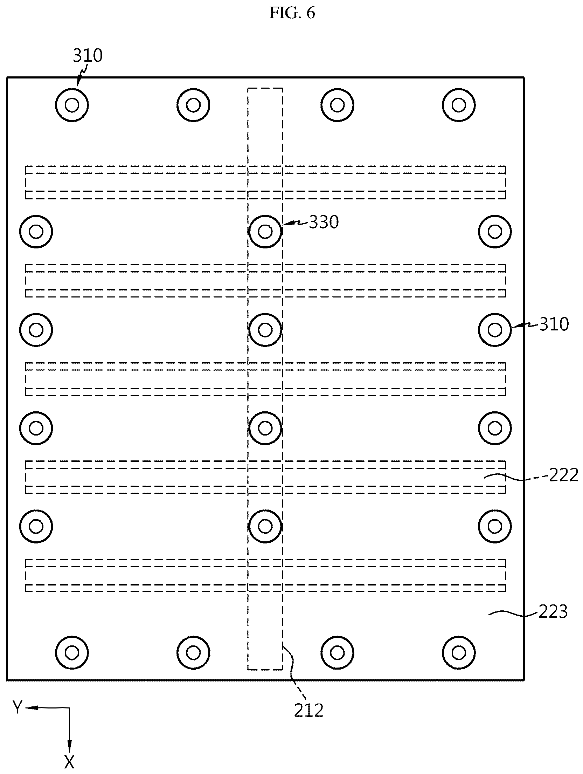

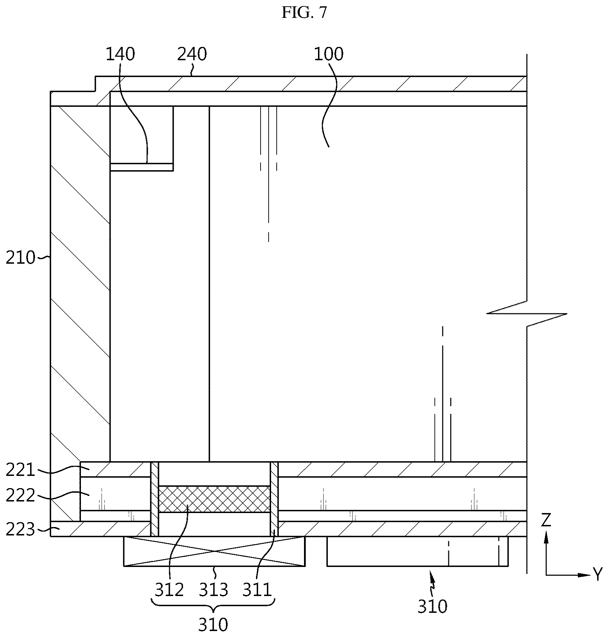

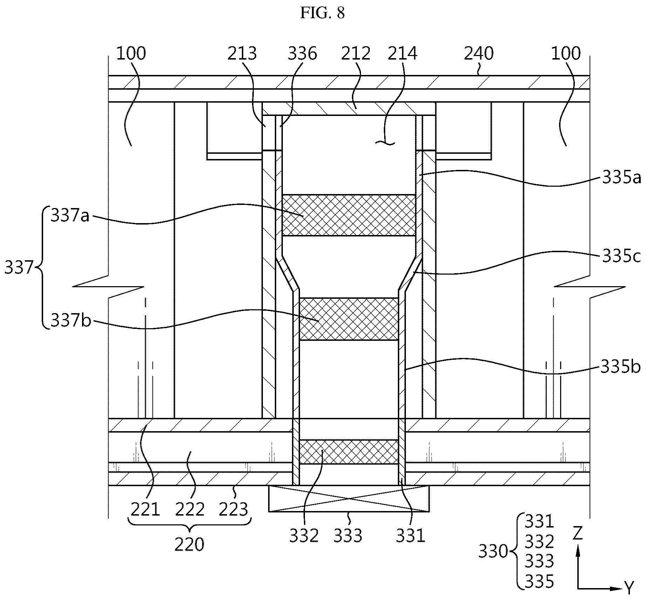

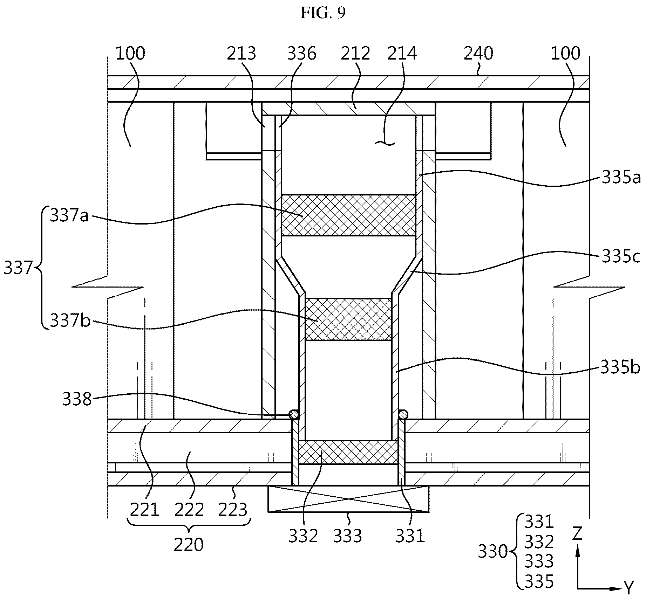

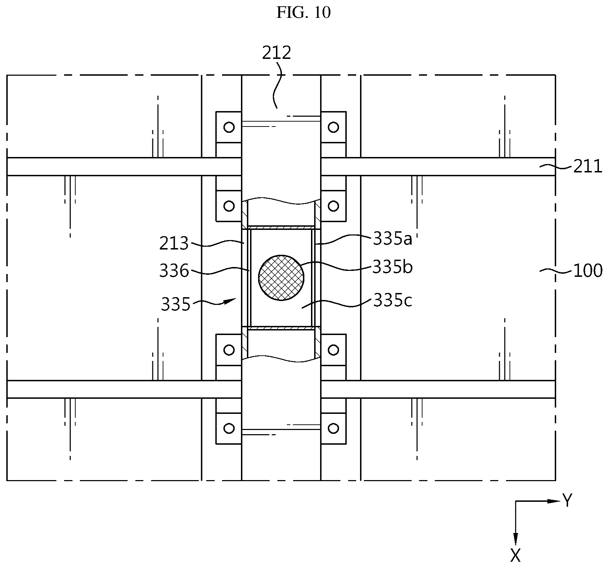

FIG. 6 is a bottom view of a battery pack according to an embodiment of the present disclosure, FIG. 7 is a view showing a first discharge portion in a discharge unit of a battery pack according to an embodiment of the present disclosure, FIG. 8 is a view showing a second discharge portion in a discharge unit of a battery pack according to an embodiment of the present disclosure, and FIG. 9 is a modified example of FIG. 8. FIG. 10 is a cutaway view of a center beam portion of a battery pack according to an embodiment of the present disclosure.

Referring to FIGS. 6 to 10 together with FIGS. 2 to 4, the discharge unit 300 may include at least one of a first discharge portion 310 and a second discharge portion 330 disposed on the lower surface of the pack case 200. In this embodiment, a case in which both the first discharge portion 310 and the second discharge portion 330 are included is described as an example.

As mainly shown in FIG. 6, the first discharge portion 310 may be provided on the outer perimeter of the lower surface of the pack case 200. In the drawing, the venting valve 313 of the first discharge portion 310 is shown frontally, and the first discharge portion 310 may be connected to the receiving space S. And, the second discharge portion 330 may be provided on the central area of the lower surface in the width direction (X-axis direction). Likewise, the venting valve 333 of the second discharge portion 330 is shown in the drawing, which may be connected to the hollow portion 214 of the center beam 212. The second discharge portion 330 may be inserted into the center beam 212. As shown in FIG. 6, a plurality of second discharge portions 330 may be provided in parallel along the center beam 212. One second discharge portion 330 may function in common to the battery module located on the left side and the battery module located on the right side based on the center beam 212. The second discharge portion 330 is located at a position that does not interfere with the bottom reinforce bar 222, and the number thereof may vary from that shown in FIG. 6.

The first discharge portion 310 may be provided on the outer perimeter of the lower surface of the pack case 200, so that the entire lower surface of the pack case 200 is utilized, and thus it may be easy to increase the number of discharge paths. For example, compared to the case where four venting valves are provided per battery pack 10 by providing two venting valves on each of the front and rear sides of the pack case 200, this embodiment may provide, for example, 16 venting valves 313 because the bottom surface of the pack case 200 has a relatively large area. Therefore, the number of venting valves may be dramatically increased, thereby improving the discharge efficiency, so that the thermal propagation phenomenon that is serially transmitted to the neighboring battery modules may be delayed. The first discharge portion 310 may be disposed in one or more per receiving space S. However, the position or quantity of the first discharge portion 310 may vary from that shown in FIG. 6.

Referring mainly to FIGS. 5 and 7, the first discharge portion 310 may include a discharge pipe 311, a first mesh net 312 disposed inside the discharge pipe 311, for example, in the middle, and a venting valve 313 provided at one end of the discharge pipe 311.

The discharge pipe 311 may be coupled to a through hole H1 formed in the base plate 221 and the bottom cover 223, respectively. Accordingly, the discharge pipe 311 may be disposed through the base plate 221 and the bottom cover 223. The discharge pipe 311 may be in the form of a pipe having a circular cross-section. Accordingly, the receiving space S of the pack case 200 may communicate with the outside of the pack case 200 through the discharge pipe 311.

The first mesh net 312 may be disposed in the discharge pipe 311. The first mesh net 312 may be disposed perpendicular to the discharge flow of the discharge pipe 311 (or a longitudinal arrangement of the discharge pipe 311). Accordingly, the solid ejection moving along the discharge pipe 311 may be smoothly filtered and captured through the first mesh net 312.

The first mesh net 312 may be fitted into a ring-shaped groove provided on the inner wall of the discharge pipe 311. The discharge pipe 311 and the first mesh net 312 may be manufactured by insert injection. In order to secure the first mesh net 312 to the inner wall of the discharge pipe 311, a protrusion (not shown) protruding toward the center may be provided on the inner wall of the discharge pipe 311.

The first mesh net 312 may include two or more types of meshes having different scale sizes. A relatively large scale mesh may be positioned higher in the Z-axis than a relatively small scale mesh. Two or more different types of meshes may be disposed in contact with each other. Two or more different types of meshes may also be disposed in a state of being spaced apart. Two or more different types of meshes may form a single unit part, which may be mounted on the discharge pipe 311 to achieve the structure of FIG. 7. When the venting gas inside the battery pack 10 flows into the discharge pipe 311 and moves downward, large-sized solid ejection are primarily filtered out by the relatively large scale mesh, and then small-sized solid ejection are secondarily filtered out by the relatively small scale mesh, after which only the gas may be discharged.

The venting valve 313 may be provided at one end of the discharge pipe 311 and connected to the discharge pipe 311. And, the venting valve 313 may be provided to be exposed on the outer surface of the bottom cover 223. The venting valve 313 may be opened when the preset pressure is above a certain level, to selectively open or close the receiving space S of the pack case 200 and the outside of the pack case 200. The discharge direction of the venting valve 313 may be directed downward from the pack case 200. The venting valve 313 is normally closed, but when the pressure is above a certain level, it may be opened to discharge the gas inside the battery pack 10, and when the pressure is lowered, it may be closed again.

In this way, the venting gas generated inside the battery module 100 may be introduced into the discharge pipe 311, and after the solid ejection are filtered out by the first mesh net 312, the venting gas may be discharged to the outside of the battery pack 10 downward from the pack case 200 through the venting valve 313. Referring mainly to FIG. 8, the second discharge portion 330 has the same configuration as the first discharge portion 310, that is, the discharge pipe 331, the first mesh net 332, and the venting valve 333, and may further include a connection pipe 335 and a second mesh net 337.

The connection pipe 335 may be a part that guides the venting gas ejected to the center beam 212 to be smoothly discharged downward from the pack case 200 through the venting valve 333 of the second discharge portion 330. To this end, the connection pipe 335 may be provided such that one end is connected to the discharge pipe 331 and the other end is in contact with the upper side lower wall of the center beam 212. And, a communication groove 336 communicating with the ejection hole 213 may be formed at one side of the connection pipe 335.

Specifically, the connection pipe 335 may include a first connecting section 335a, a second connecting section 335b having a circular cross-section, and a pipe reduction section 335c.

The first connecting section 335a may refer to an upper area of the connection pipe 335 based on FIG. 8. Referring to FIG. 10, the first connecting section 335a may have a rectangular cross-section, and the outer surface thereof may be disposed to face the inner wall of the side surface of the center beam 212. When the first connecting section 335a is configured to correspond to the inner shape of the center beam 212 in this way, the space of the hollow portion 214 of the center beam 212 may be utilized to the maximum extent, thereby facilitating discharging a large amount of venting gas. And, a communication groove 336 is formed in the first connecting section 335a, and the communication groove 336 may be disposed to communicate with the ejection hole 213. The communication groove 336 may have substantially the same size as the ejection hole 213. Accordingly, it is possible to minimize the venting gas or the like from entering the other hollow portion 214 of the center beam 212 instead of entering the connection pipe 335. That is, leakage may be minimized.

The second connecting section 335b refers to one end of the connection pipe 335 connected to the discharge pipe 331, and may be provided in a lower area of the connection pipe 335 in the drawing. The second connecting section 335b may be made of a pipe material having a circular cross-section, and the inner diameter of the second connecting section 335b may be provided to be substantially the same as the inner diameter of the discharge pipe 331. Alignment, connection, or assembly with the discharge pipe 331 may be smoothly performed by forming the second connecting section 335b in a circular shape.

FIG. 9 is a modified example of FIG. 8. Referring to FIG. 9, the inner diameter of the second connecting section 335b is smaller than the inner diameter of the discharge pipe 331, and the second connecting section 335b has a length extending downward than the base plate 221, so that the second connecting section 335b is forcibly fitted into the discharge pipe 331, and thus the second connecting section 335b and the discharge pipe 331 are assembled to each other. A sealing member 338 may be further applied to the connection part of the second connecting section 335b and the discharge pipe 331 to prevent gas leakage from the connection part.

Referring to FIGS. 8 and 9, the pipe reduction section 335c may interconnect the first connecting section 335a and the second connecting section 335b. The pipe reduction section 335c is tapered to have a decreasing inner diameter, so that the discharge flow of the venting gas may not be obstructed in the process where the inner diameter between the first connecting section 335a and the second connecting section 335b decreases.

Referring mainly to FIGS. 8 to 10, the second mesh net 337 may be disposed inside the connection pipe 335. The second mesh net 337 may be provided in plurality inside the connection pipe 335. For example, two second mesh nets 337 are provided in this embodiment, wherein one second mesh net 337a may be disposed in the first connecting section 335a and the other second mesh net 337b may be disposed in the second connecting section 335b. Through the plurality of second mesh nets 337, the capture efficiency of the solid ejection may be further improved. Meanwhile, for convenience of description, some of the second mesh nets 337 are omitted in FIG. 10.

The second mesh net 337a and the second mesh net 337b may be mesh nets having the same size of scale, or the second mesh net 337a may have a larger scale than the second mesh net 337b. As such, if the second mesh net 337a having a relatively large scale is positioned higher in the Z-axis than the second mesh net 337b having a relatively small scale, when the venting gas inside the battery pack 10 flows into the connection pipe 335 and moves downward, large-sized solid ejection is primarily filtered out by the relatively large scale second mesh net 337a, and then small-sized solid ejection is secondarily filtered out by the relatively small scale second mesh net 337b, after which only the gas may be discharged after being filtered out once more by the first mesh net 332.

Through the second discharge portion 330 having such a configuration, the venting gas generated in the internal space of the battery module 100 may reach the receiving space S through the side venting or upper venting of the battery module 100 and flow into the connection pipe 335 through the communication groove 336 via the ejection hole 213 of the center beam 212, and then may be guided to move downward. In this case, the venting gas is ejected into the connection pipe 335 through the communication groove 336 disposed to communicate with the ejection hole 213, and the venting gas is not allowed to move to other empty spaces of the center beam 212. The venting gas moved downward may pass through the discharge pipe 331 and the first mesh net 332 and finally be discharged downward from the pack case 200 through the venting valve 333. The venting valve 333 is normally closed, but when the pressure is above a certain level, it may be opened to discharge the gas inside the battery pack 10, and when the pressure is lowered, it may be closed again.

The second mesh net 337 may be fitted into a ring-shaped groove provided on the inner wall of the connection pipe 335. The connection pipe 335 and the second mesh net 337 may be manufactured by insert injection. In order to secure the second mesh net 337 to the inner wall of the connection pipe 335, a protrusion (not shown) protruding toward the center may be provided on the inner wall of the connection pipe 335.

In this way, the venting gas generated inside the battery module 100 may be introduced into the center beam 212, and after being filtered out by the second mesh net 337 and the first mesh net 332 while flowing through the connection pipe 335 and the discharge pipe 331, the venting gas may be discharged to the outside of the battery pack 10 downward from the pack case 200 through the venting valve 333.

The ejection hole 213 of the center beam 212 may be formed on the upper side of the side surface of the center beam 212. Accordingly, the venting gas including solid ejection and gas may form a discharge path so as to have a zigzag path in the height direction of the battery module 100 while using the entire space in the height direction of the center beam 212, thereby ensuring a sufficiently long discharge path, which will be described in detail in the description of the discharge process.

According to this embodiment, the venting gas generated by a thermal event may be discharged in a downward direction of the battery pack 10 that is not obstructed or blocked by structures such as a vehicle body or chassis provided adjacent to the battery pack 10. Additionally, according to this embodiment, the solid ejection among ejection may be filtered out during the discharge process.

Therefore, before thermal energy is accumulated due to the ejection inside the battery pack 10, the venting gas or the like may be discharged smoothly and quickly. As the pressure and thermal energy inside the battery pack 10 are discharged efficiently, the thermal propagation phenomenon that is serially transmitted to the neighboring battery modules 100 may be delayed.

Additionally, the solid ejection including electrode ejection or spark particles may be captured and separated by the plurality of mesh nets of the discharge unit 300, and only the venting gas may be discharged to the outside of the pack case 200, thereby minimizing clogging of the venting valves 313, 333.

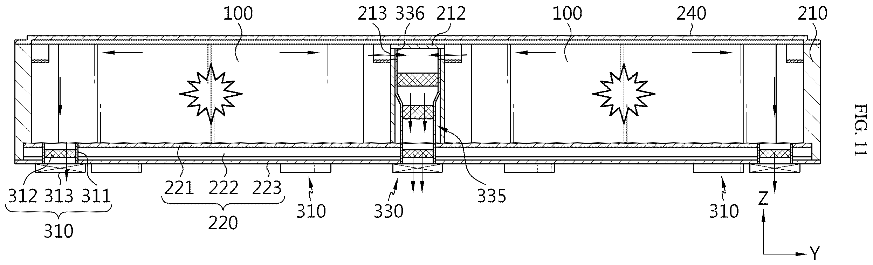

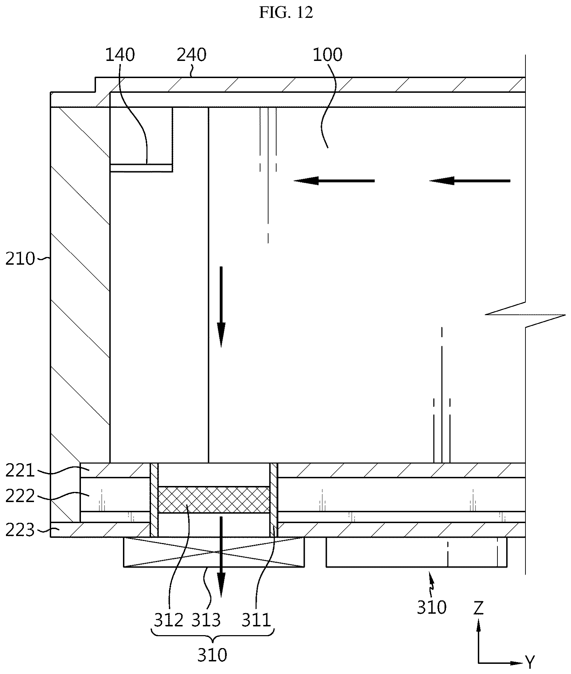

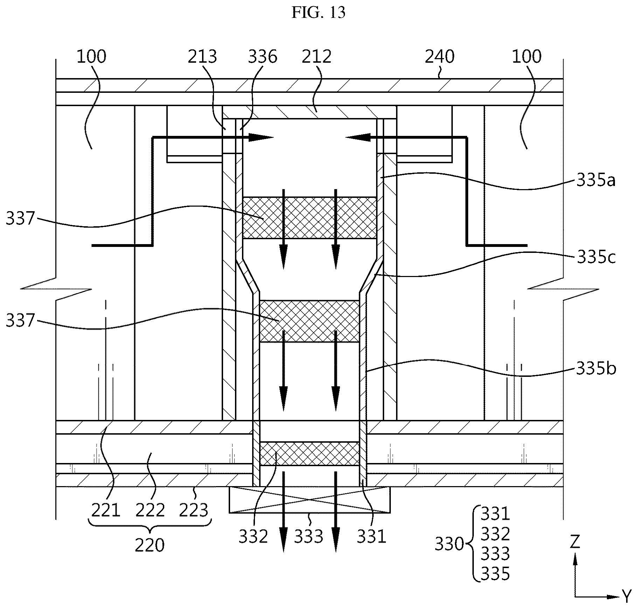

FIG. 11 is a view schematically showing a process of discharging venting gas of a battery pack according to an embodiment of the present disclosure, and FIGS. 12 and 13 are partial enlarged views of the first discharge portion and the second discharge portion in FIG. 11, respectively.

Hereinafter, the discharge process in which the venting gas according to this embodiment is easily discharged to the outside will be described in detail with reference to FIGS. 11 to 13.

First, when a thermal event occurs in a specific battery module 100 of FIG. 11 to cause upper venting or side venting, the internal pressure within the receiving space S increases and a large amount of venting gas and solid ejection are generated in the receiving space S.

Next, the venting gas and solid ejection move in the length direction of the battery module 100 based on FIG. 11 and are directed to the first discharge portion 310 or the second discharge portion 330. The venting gas or the like moved to the first discharge portion 310 moves downward through the discharge pipe 311 as shown in FIG. 12, and during the movement process, the solid ejection is captured in the first mesh net 312, and only the gas may be discharged downward from the pack case 200. Accordingly, the internal pressure of the battery pack 10 may decrease or the internal pressure increase speed may be reduced. The thermal propagation speed is slowed down when the internal pressure increase is relieved, so that the thermal propagation delay performance may be improved according to the present disclosure.

Additionally, the venting gas or the like moved to the second discharge portion 330 is ejected into the ejection hole 213 of the center beam 212 and enters the connection pipe 335 through the communication groove 336 communicating therewith. In this process, as shown in FIG. 13, the solid ejection and the venting gas may form a discharge flow while having a zigzag path in the height direction of the battery module 100. That is, the solid ejection may be detached while rising to the height of the ejection hole 213 and entering the connection pipe 335 through the communication groove 336. And, while being guided by the connection pipe 335 and discharged downward, the solid ejection is captured by the plurality of second mesh nets 337, and then filtered by the first mesh net 332 of the discharge pipe 331, after which only the venting gas may be discharged downward from the pack case 200. Compared to the first discharge portion 310, the movement path of the venting gas in the second discharge portion 330 is formed in a zigzag shape, while the movement path may be longer. And, as the movement path of the venting gas is longer, the plurality of second mesh nets 337 may perform the filtering and capturing processes in the process, thereby further improving the capture efficiency of the solid ejection.

As such, according to this embodiment, it may be moved the inside of the center beam 212 by the side venting or upper venting in the module section, and then vented downward through the second discharge portion 330. Accordingly, the internal pressure of the battery pack 10 may decrease or the internal pressure increase speed may be reduced. The thermal propagation speed is slowed down when the internal pressure increase is relieved, so that the thermal propagation delay performance may be improved according to the present disclosure.

As mentioned above, each of the battery modules 100 may be completely surrounded by the transverse partition wall 211, the center beam 212 and the top cover 240, and isolated from the other battery modules 100. That is, each of the receiving spaces S is isolated from each other, and the venting gas generated from any one of the battery modules 100 may be discharged downward through the first discharge portion 310 and the second discharge portion 330 within the receiving space S where the battery module 100 is located. Therefore, it is possible to avoid affecting other normal battery modules inside the battery pack 10 as much as possible in the event of thermal runaway of a single battery module, and since the venting gas may be discharged in a timely manner, the high-temperature venting gas does not remain inside the battery pack 10 to cause thermal accumulation, and at the same time as discharging the venting gas, damage to other battery modules in the battery pack 10 may be effectively prevented.

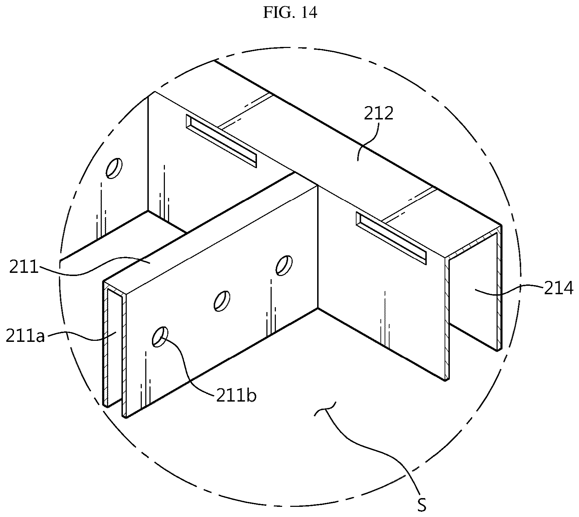

Meanwhile, FIG. 14 shows a modified example of portion B in FIG. 3.

Referring to FIG. 14, a hollow portion 211a may be formed in the transverse partition wall 211, a hole 211b communicating with the receiving space S may be formed in the transverse partition wall 211, and the hollow portion 211a of the transverse partition wall 211 and the hollow portion 214 of the center beam 212 may be configured to communicate with each other. In this case, the venting gas in the receiving space S may flow into the hollow portion 211a of the transverse partition wall 211 through the hole 211b, move inside the transverse partition wall 211 through the hollow portion 211a, and then flow into the hollow portion 214 of the center beam 212 communicated therewith, and be vented downward through the second discharge portion 330 connected thereto. When using a large-capacity battery cell, it is important to ensure the length of the venting path. According to this configuration, the second discharge portion 330 is located at the bottom of the pack case 200, but the venting path may be ensured sufficiently long through the inside of the center beam 212 or the inside of the center beam 212 and the transverse partition wall 211.

By this configuration, the venting gas or the like generated by a thermal event may be discharged in a downward direction from the battery pack 10 that is not obstructed or blocked by structures such as a vehicle body or chassis provided adjacent to the battery pack 10, and the solid ejection among ejection may be filtered out during the discharge process. Therefore, before thermal energy is accumulated due to the ejection inside the battery pack 10, the venting gas or the like may be discharged smoothly and quickly. As the pressure and thermal energy inside the battery pack 10 are discharged efficiently, the thermal propagation phenomenon that is serially transmitted to the neighboring battery modules 100 may be delayed.

Additionally, the solid ejection including electrode ejection and spark particles may be captured and separated by the plurality of mesh nets 312, 332, 337 of the discharge unit 300, and only the venting gas may be discharged to the outside of the pack case 200, thereby minimizing clogging of the venting valves 313, 333.

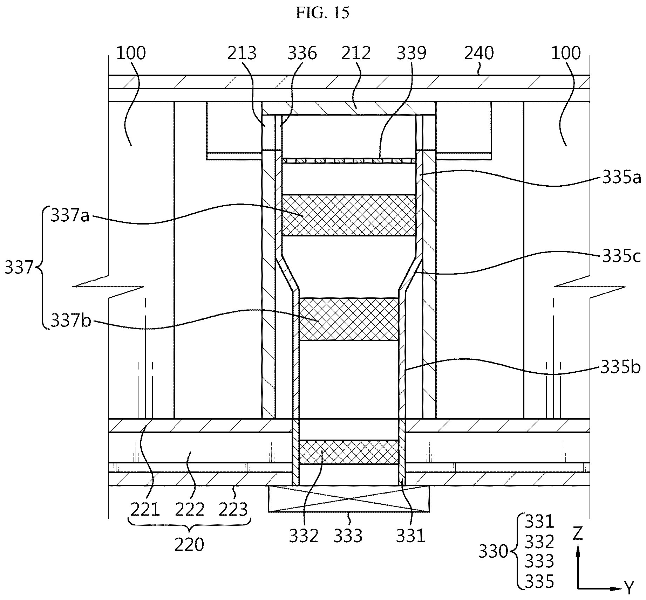

FIG. 15 is another modified example of FIG. 8.

Referring to FIG. 15, the second discharge portion 330 may include a baffle plate 339 within the connection pipe 335. The baffle plate 339 may be located above the second mesh net 337. The venting gas introduced into the connection pipe 335 through the communication groove 336 may first hit the baffle plate 339. The baffle plate 339 may prevent rotational flow or backflow within the communication groove 336. The baffle plate 339 may be a shielded structural plate installed perpendicular to the length direction of the connection pipe 335, as shown. The baffle plate 339 may have a shape of a disk, a donut plate, or a half-moon plate having a plurality of holes. The baffle plate 339 may prevent electrode fragments or spark particles introduced together with the venting gas from returning back to the receiving space S through the communication groove 336.

The baffle plate 339 may be fitted into a ring-shaped groove provided on the inner wall of the connection pipe 335. The connection pipe 335 and the baffle plate 339 may be manufactured by insert injection. In order to secure the baffle plate 339 to the inner wall of the connection pipe 335, a protrusion (not shown) protruding toward the center may be provided on the inner wall of the connection pipe 335.

When the baffle plate 339 is further included in this way, the venting gas and solid ejection introduced into the connection pipe 335 may not be ejected in all directions and upwards, thereby preventing damage not only to the battery module where the event occurred but also to the surrounding battery modules.

Meanwhile, the battery pack 10 according to the present disclosure, although not shown, may further include various devices for controlling the charging and discharging of the battery modules 100, for example, a battery management system (BMS), a current sensor, a fuse, and the like.

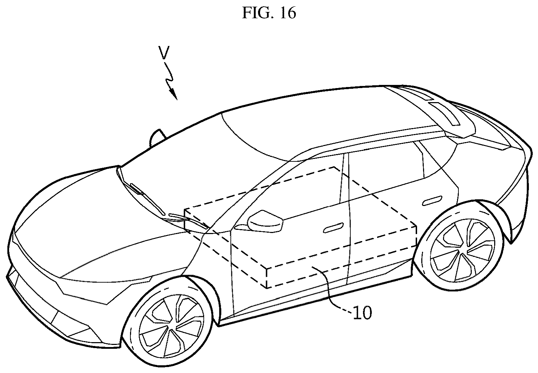

FIG. 16 is a view for describing a vehicle according to an embodiment of the present disclosure.

Referring to FIG. 16, the battery pack 10 according to the present disclosure may be applied to a vehicle such as an electric vehicle or a hybrid vehicle. That is, the vehicle V according to the present disclosure may include the battery pack 10 according to the present disclosure. The battery pack 10 may be installed in a vehicle body frame under the vehicle seat or in a trunk space, and when installed in the vehicle, the battery pack 10 may be placed in a reversed order of arrangement as needed.

The terms indicating directions as used herein such as upper, lower, left, right, front, and rear are used for convenience of description only, and it is obvious to those skilled in the art that the term may change depending on the position of the stated element or an observer.

The present disclosure has been hereinabove described with regard to a limited number of embodiments and drawings, but the present disclosure is not limited thereto and it is obvious to those having ordinary skill in the technical field pertaining to the present disclosure that a variety of modifications and variations may be made thereto within the technical aspects of the present disclosure and the equivalent scope of the appended claims.

### [Explanation of Reference Signs]

| | | | |
|---|---|---|---|
| V: | vehicle | | |
| 10: | battery pack | | |
| 100: | battery module | 120: | module case |
| 140: | terminal | 200: | pack case |
| S: | receiving space | 210: | pack frame |
| 211: | transverse partition wall | 212: | center beam |
| 220: | lower frame portion | 221: | base plate |
| H: | through hole | 222: | bottom reinforce bar |
| 223: | bottom cover | 240: | top cover |
| 300: | discharge unit | | |
| 310: | first discharge portion | 311: | discharge pipe |
| 312: | first mesh net | 313: | venting valve |
| 330: | second discharge portion | 331: | discharge pipe |
| 332: | first mesh net | 333: | venting valve |
| 335: | connection pipe | 335a: | first connecting section |
| 335b: | second connecting section | 335c: | pipe reduction section |
| 336: | communication groove | | |

## Claims

1. A battery pack comprising:
a plurality of cell assemblies;
a pack case in which a receiving space for accommodating the plurality of cell assemblies is formed; and
a discharge unit provided to be partially exposed to one side of the pack case and discharging venting gas generated by a thermal event in the cell assembly to the outside of the pack case.

2. The battery pack according to claim 1,
wherein the discharge unit is configured to capture solid ejection ejected together with the venting gas and discharge the venting gas to the outside.

3. The battery pack according to claim 1,
wherein the discharge unit is provided at the lower side of the pack case to discharge the venting gas downward from the pack case.

4. The battery pack according to claim 1,
wherein the cell assembly is disposed along the width direction and the length direction within the receiving space of the pack case, and
the discharge unit comprises at least one of:
a first discharge portion provided on the outer perimeter of the lower surface of the pack case; and
a second discharge portion provided along the width direction on the central area of the lower surface.

5. The battery pack according to claim 1,
wherein the pack case comprises:
a pack frame provided to have open top and bottom ends to accommodate the cell assembly therein; and
a lower frame portion disposed below the pack frame to seat and support the plurality of cell assemblies.

6. The battery pack according to claim 5,
wherein the lower frame portion comprises:
a base plate coupled to the pack frame to support the cell assembly; and
a bottom cover disposed on the lower surface of the pack case so as to cover the base plate.

7. The battery pack according to claim 6,
wherein the cell assembly is disposed along the width direction and the length direction within the receiving space of the pack case, and
the discharge unit comprises at least one of:
a first discharge portion provided on the outer perimeter of the lower surface of the pack case; and
a second discharge portion provided along the width direction on the central area of the lower surface,
wherein each the first discharge portion and the second discharge portion comprises:
a discharge pipe disposed through the base plate and the bottom cover; and
a venting valve connected to communicate with the discharge pipe and provided to be exposed to the outer surface of the bottom cover.

8. The battery pack according to claim 7,
wherein solid ejection is ejected together with the venting gas, and the battery pack further comprises a first mesh net disposed in the discharge pipe to capture the solid ejection.

9. The battery pack according to claim 7,
wherein the lower frame portion further comprises a bottom reinforce bar provided between the lower portion of the base plate and the bottom cover, and
a plurality of through holes into which the discharge pipe is inserted are provided in the base plate and the bottom cover,
wherein the through holes are formed at a position that does not interfere with the bottom reinforce bar.

10. The battery pack according to claim 7,
wherein the cell assembly is disposed along the width direction and the length direction within the receiving space of the pack case, and
the base plate is provided with a center beam that is disposed to extend in the width direction of the cell assembly and mutually separates the cell assemblies adjacent to each other in the length direction.

11. The battery pack according to claim 10,
wherein ejection holes provided on both side surfaces through which the venting gas is ejected are formed on the center beam.

12. The battery pack according to claim 11,
wherein the ejection holes are formed on the upper side of the side surface of the center beam.

13. The battery pack according to claim 11,
wherein the second discharge portion further comprises:
a connection pipe provided to be in contact with the inner wall of the center beam, and configured such that one end is disposed adjacent to the ejection hole and the other end is connected to the discharge pipe; and
a plurality of second mesh nets disposed in the connection pipe.

14. The battery pack according to claim 13,
wherein a communication groove that communicates with the ejection hole is formed on one side of the connection pipe.

15. The battery pack according to claim 14,
wherein the connection pipe comprises:
a first connecting section having the communication groove formed and having a cross-section in a rectangular shape;
a second connecting section having a cross-section in a circular shape; and
a pipe reduction section interconnecting the first connecting section and the second connecting section, the pipe reduction section being tapered to have a decreasing inner diameter.

16. The battery pack according to claim 13,
wherein solid ejection is ejected together with the venting gas, and
the battery pack further comprises a first mesh net disposed in the discharge pipe to capture the solid ejection,
wherein the solid ejection is captured by the first mesh net and the second mesh net, and
the venting valve is provided to discharge only the venting gas.

17. The battery pack according to claim 10,
wherein the cell assembly is accommodated in a module case to form a battery module, and
the battery pack further comprises:
a transverse partition wall that comparts the receiving space for each of the battery modules together with the center beam; and
a top cover that seals the receiving space, and
the venting gas from any one battery module is discharged to the outside of the battery pack through the first discharge portion or the second discharge portion from each of the receiving spaces without affecting the other battery modules.

18. The battery pack according to claim 17,
wherein a hollow portion is formed in the transverse partition wall, a hole communicating with the receiving space is formed in the transverse partition wall, and the hollow portion of the transverse partition wall and the hollow portion of the center beam are communicated with each other.

19. The battery pack according to claim 10,
wherein the second discharge portion is inserted into the center beam.

20. A vehicle comprising a battery pack according to any one of claims 1 to 19.
